Europäisches Patentamt

European Patent Office

Office européen des brevets

(19)

(11) **EP 0 980 009 B1**

(12) **EUROPEAN PATENT SPECIFICATION**

(45) Date of publication and mention
of the grant of the patent:
**18.06.2003  Bulletin 2003/25**

(51) Int Cl.⁷: **G01S 13/02**, G01S 7/02

(21) Application number: **99306164.7**

(22) Date of filing: **03.08.1999**

(54) **Radar**

Radar

Radar

(84) Designated Contracting States:
**AT BE CH CY DE DK ES FI FR GB GR IE IT LI LU
MC NL PT SE**

(30) Priority: **10.08.1998  GB 9817385**

(43) Date of publication of application:
**16.02.2000  Bulletin 2000/07**

(73) Proprietor: **ERA PATENTS LIMITED
Leatherhead Surrey KT22 7SA (GB)**

(72) Inventor: **Daniels, David John
Horsham, West Sussex RH13 8AX (GB)**

(74) Representative: **Rackham, Stephen Neil
GILL JENNINGS & EVERY,
Broadgate House,
7 Eldon Street
London EC2M 7LH (GB)**

(56) References cited:
**FR-A- 2 740 408         US-A- 5 719 581
US-A- 5 766 208**

**Description**

The present invention relates to a radar system, and in particular to an improved interface for communicating information such as the range and bearing of a target and the strength of the received signal to an operator. This is particularly suitable for a ground probing radar but can be used in conjunction with any ranging radar system.

A typical radar system includes a radio frequency transmitter which transmits radio frequency signals. When the signals strike a target object, the signals are reflected, and the reflected signals are detected by a detector. The distance of the target from the radar is determined based on the time taken between transmission of the RF signal to the detection of the reflected RF signal. This is possible due to the substantially constant velocity of the RF signals. Accordingly, where the target is closer to the transmitter and receiver there will be a short period between transmission of the signal and reception of the reflected signal, and where there is a greater distance between the radar and the target there will be a longer time gap between transmission of the signals and detection of the reflected signals. The amplitude of the reflected signals will be dependent primarily on the reflectivity of the target, and accordingly the amplitude of the detected reflected signal will depend upon the nature of the target. By selection of appropriate antennas, it is also possible to determine the bearing of a target which reflects the radar signal.

For ground probing radar, the identification of objects is possible due to the changes in reflected signals at adjacent locations. For example an underground pipe may be identified where there is a similar signal detected at locations in one direction, but a significant difference in signals detected in a transverse direction to either side of the pipe.

Radar systems are also known in which the range or nature of a target is determined based on the change in frequency between the transmitted and reflected signals.

Conventional radar system include a visual display, for example in the form of an oscilloscope, liquid crystal display or thin film transistor display. Typically, for a time based radar system, the display shows the amplitude of the reflected signal detected against time after the signal is transmitted. This is known as an A-scan. A problem with this type of display is that it is difficult for an operator to interpret, especially where there are a large number of targets which reflect the RF signal giving multiple reflections.

Especially for ground probing radar, it is also known to use a B-scan to graphically display detected signals. In this case, one axis of the scan shows the position at which the measurement is taken, and the other axis shows the time after transmission of the radar signal. The amplitude of any detected signal is converted to a shade on a grey scale, with a light shade for no or small amplitude detected signals and a dark shade for large amplitude detected signals. Accordingly the B-scan provides a visual display showing simultaneously the radar detection at a number of adjacent locations. This display is still difficult to interpret, and can only be generated after all measurements have been taken.

According to the present invention, a radar including a signal source for emitting an RF signal and a detector detecting the RF signal reflected from a target and outputting a signal dependent on the range of the target and the amplitude of the reflected signal further comprises a means generating an audio signal whose frequency and amplitude is dependent upon the range of the target and the amplitude of the reflected signal.

With the radar system according to the present invention, rather than the operator needing to visually inspect a visual display and analyse this to determine the range and nature of the target or targets, the operator hears an audio signal which can contain information relating to all detected targets and can be presented to the operator in a way in which the separate targets can easily be distinguished. This is possible as it is easier for an operator to distinguish between different amplitudes and different frequencies in an audio signal than different peaks on a visual display. Also, it is easier for an operator to identify the location of an object by the gradual or abrupt changes in tone or amplitude as the radar scans over the different locations. Accordingly it is possible to instantaneously locate an object when sweeping over an area rather than scanning an area and then generating a B-scan.

Advantageously the frequency of the audio signal is dependent upon the range of the target, and the amplitude is dependent upon the amplitude of the reflected signal. This has been found to allow optimum interpretation of the results by the operator.

Preferably the maximum range of the radar is divided into a number of different, generally equal distances, for example 0.1 metre and each of these different distances is assigned an audio signal having a different frequency or amplitude. For example, if 256 different levels are provided, a frequency of 4096Hz may be assigned for the closest targets, and a frequency of 32Hz for targets furthest from the radar. This gives a range of frequencies easily detectable by the human ear.

It is preferred that the amplitude of the audio signal is adjusted to compensate for other factors which may affect accurate determination of the range of the target or amplitude of the reflected signal. In particular, it is preferred that the amplitude of the generated audio signals is adjusted dependent upon the amplitude/frequency response of the human ear. In this case, the amplitude of high frequency signals is increased in comparison of that of low frequency signals so that the amplitude of the audio signal which can be determined by the human ear is dependent only upon the desired parameter of the detected RF signal. Advantageously, the amplitude of the audio signal is adjusted to compensate for losses such as spreading loss and path loss of the RF signal, and to avoid beat note interference between adjacent tones.

Advantageously, the radar system includes an analog to digital converter to convert the amplitude of the detected signals into a digital value. The value corresponding to the amplitude of the detected signals is stored in one of a number of memories or range bins. The memory location in which any particular value is stored is dependent upon the range of the target reflecting the signal, which may in turn be determined from the delay between transmission and reception of the signal.

In this case, the radar system may include an audio oscillator associated with each memory location, each of the oscillators having a different audio frequency. The output of each oscillator is input to a gain controlled amplifier, the gain of each amplifier being controlled by the value stored in the associated memory location. Accordingly, each amplifier outputs a signal having a frequency dependent upon the range to which the associated memory location relates, and an amplitude corresponding to the amplitude of any signal detected at that range. If no signal is reflected at a particular range, there will be no output. The output of all gain controlled amplifiers are added together. The resulting signals may be amplified by an audio amplifier and supplied to headphones or a loudspeaker for audio transmission.

Preferably the radar is a ground probing radar, and in this case a single diplexed antenna may be provided for both transmission and reception of the RF signals. It is however preferred that separate antennas are provided for transmitting and for receiving the signals. This avoids the need to rapidly switch the antenna between transmit and receive mode.

Advantageously, two spaced apart radar systems may be provided and simultaneously scanned to give bearing information, such as azimuth or elevation target position. In this case, the audio output is stereo audio output, and from this the bearing of the target can be determined.

Preferably the radar is a time-domain ultrawideband impulse system transmitting a wavelet of between 0.1ns and 10ns. More preferably, the wavelet is around 0.5ns.

Preferably the antenna or antenna array for the radar system provides at least octave, and more preferably decade, bandwidth transmission characteristics, and gives a linear phase response. Suitable antennas which meet these requirements are TEM horns, resistively loaded antennas, biconical antennas, loaded dipoles and bow-tie antennas. The antenna or antenna array preferably includes a shunt loading arrangement to reduce time sidelobes.

Preferably the radar includes signal processing means able to improve the quality of the signals. This may include one or more of a noise reduction system which averages the signal over finite time periods, a clutter reduction system which subtracts the mean of a number of results, frequency filtering to remove signals which are not in the desired information bandwidth and a time varying gain system to provide greater accuracy in the determine range of targets.

Examples of the present invention will be described and contrasted with the prior art systems in accordance with the accompanying drawings in which:

Figure 1 shows a typical A-scan visual display for a conventional radar;
Figure 2 shows a typical B-scan visual display for a conventional radar;
Figure 3 shows a block diagram of a radar according to the present invention;
Figure 4 shows a schematic view of the audio generating means of the radar of Figure 3;
Figure 5 shows the relationship between a visual B-scan and an audio signal generated by the present invention;
Figure 6 shows an alternative example of a radar;
Figure 7 shows a further example of a radar; and,
Figures 8 and 9 show a still further example of a radar.

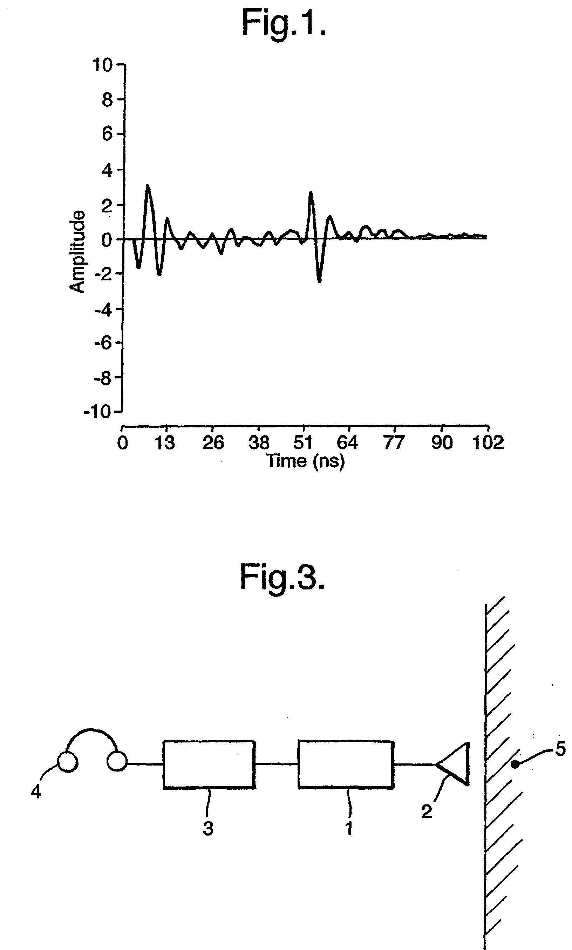

A conventional radar generates an output which is dependent upon the amplitude and timing of the detected RF signals reflected from a target. The amplitude of the detected signals is dependent upon the nature of the target from which the signals are reflected, and the timing of the detected signals is dependent upon the range of the target. Typically the detected signals are displayed on an oscilloscope as an "A-scan". A typical display is shown in Figure 1. In this case, each of the peaks corresponds to a target, and the range of the target corresponds to the time at which the signal is received.

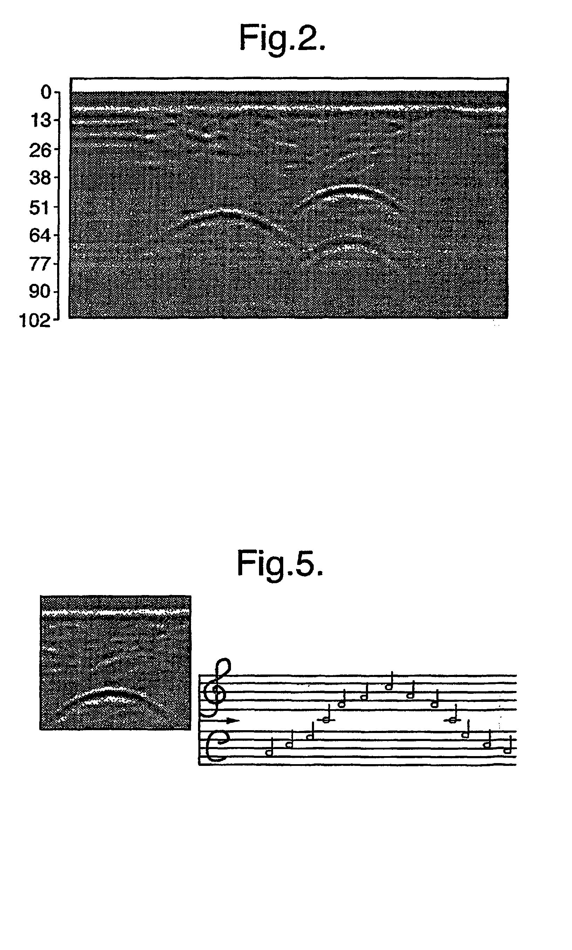

An alternative visual display, known as a B-scan, is shown in Figure 2. In this case, the y-axis shows the time between transmission and detection of the RF signal, and accordingly corresponds to range. The x-axis relates to different locations, and accordingly a vertical line on the display corresponds to the single set of measurements shown in Figure 1. The amplitude of the detected signal determines the shade on the display, with high amplitude signals being shown as a darker colour. Accordingly, the overall display shows the amplitude of reflected signals as different ranges over an area.

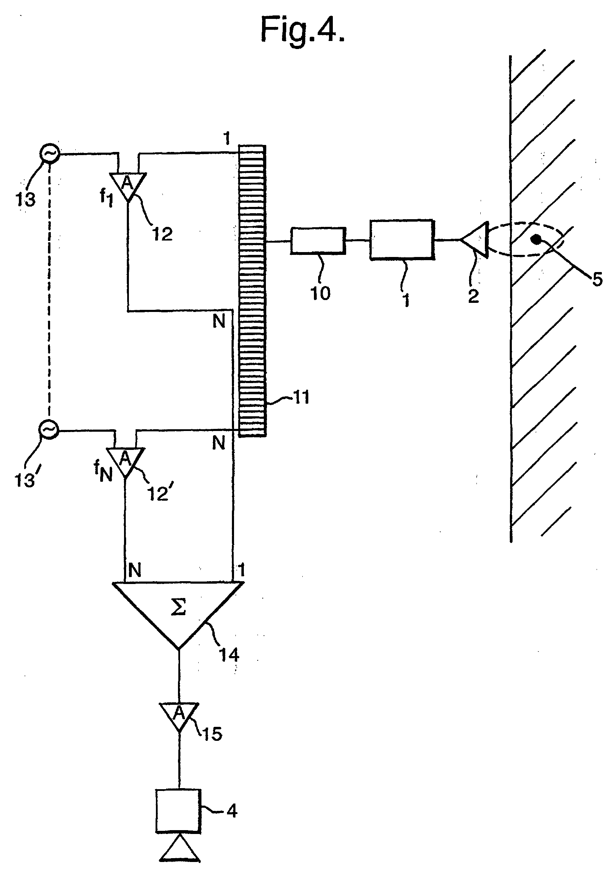

An example of a radar according to the present invention is shown in Figure 3. The radar system 1 includes a transmitter which generates impulse or monocycle waveform radar signals which are suitable for penetrating soils and man-made materials. These signals are generated by the discharge of stored energy in a short transmission line, for example using the avalanche breakdown mode in transistors to generate an output pulse of several hundred volts over a duration of around 1ns at repetition intervals of about 1μs using a step recovery diode. In theory, this system can produce a pulse repetition rate as short as 0.25μs. The high repetition rate improves the dynamic range of the impulse system. The use of the high pulse repetition rate makes it possible to average the received signal to give a more effective receiver sensitivity as discussed below.

The radar signal is transmitted by an antenna or antenna array having broad bandwidth transmission characteristics and a linear phase response. The antenna may be a TEM horn, resistively loaded antenna, biconical antenna, loaded dipole or bow-tie antenna. The antenna differentiates the radar signal generated by the transmitter to produce a wavelet, the duration of which is dependent upon the antenna size and characteristics. Where a continuously loaded resistive antenna is used, this may be formed from a thin nichrome film in which radial cuts are provided to reduce the transfer currents, and shunt loading is provided to obtain very low time side lobes for the antenna.

A separate antenna is used to receive reflected radar signals from a target. The provision of a separate receiver antenna avoids the difficulty of providing a fast transmit/receive switch. The antenna are designed to minimise cross coupling levels between the antenna. The antenna are polarised, either vertically or horizontally.

The receiver provided in the radar system 1 includes a high speed sampling circuit which transforms the real time window from the nanosecond to the millisecond time range with low levels of sample jitter, typically around 20 to 50 ps. The receiver uses low noise amplifiers and time varying gain to compress the higher level signals, and averaging to recover the low level signals reflected from more distant targets.

Details of suitable transmitter and receiver systems can be found in "Surface Penetrating Radar" by D. J. Daniels, ISBN 0 85296 862 0 or from ERA Technology SPRScan equipment manual or other manufacturers such as GSSI, Sensors and Software, Mala or EMRAD.

In general, signal processing is performed on:

    (1) Individual amplitude-time waveforms
    (2) Collections of amplitude-time waveforms
    (3) Collections over a volume (3-D).

The received time waveform may be described as the convolution of several time functions, each of which is the impulse response of part of the system. In addition, there is noise n.

Thus:

$$f_r(t) = f_t(t)*f_r(t)*f_b(t)*f_g(t)*f_u(t)*f_g(t)*f_r(t)*n(t)$$

where

    $f_u(t)$ is the signal applied to the transmitting trans-

ducer;
    $f_r(t)$ is the time response of the receiving transducer;
    $f_b(t)$ is a breakthrough function;
    $f_g(t)$ is the response of the ground; and
    $f_u(t)$ is the response of the set of underground targets.

The function $f_u(t)$ is itself made up of the convolution of a delta function sequence $f_d(t)$, representing the distribution of targets, together with the response of an individual target, $f_x(t)$. When more than one target type is involved, each has its own individual response and distribution. The time parameter in the delta function sequence $f_d(t)$ is related, through the wave velocity in the medium, to the distance from transmitting transducer to the target and back to the receiving transducer. The breakthrough function, $f_b(t)$, is made up of the convolution of a breakthrough inherent to the transmit and receive transducer design and geometry, $f_{bo}(t)$, with a modifying function, $f_{bg}(t)$ which arises due to the presence of the ground and its associated inhomogeneity in the vicinity of the transducer. Similarly, the presence of the ground, even if uniform, modifies the transducer response from its free space form $f_{oo}(t)$ to $f_r(t) = f_{oo}(t)*f_{og}(t)$. When the transducers are not identical then $f_r(t)$ and $f_b(t)$ are both affected. The only term known with certainty in all systems is $f_r(t)$. The ground properties, $f_g(t)$, in terms of the frequency variation of its attenuation and dispersion can be measured on a statistical basis. The basic techniques for the processing of individual time waveforms are as follows:

Noise reduction by averaging

Whatever the transmitted waveform, unless it is random noise, its repetition allows a series of nominally identical measurements to be averaged. The noise bandwidth is reduced to 1/Nt when the unweighted mean is taken of N measurements spaced in time by t. This can be reduced to any desired level by spending long enough over the sequence of measurements. If each record is stored, or if a sufficient number are stored in a buffer, then weighted averaging can be performed. The average of this is only marginal, however, but it makes possible the equality of noise bandwidth and signal bandwidth under circumstances when the latter is known to be less than the systems bandwidth (because of oversampling, for example). This technique reduces random noise but has no effect on clutter.

Clutter reduction by subtracting the mean

This involves the use of a number of measurements made at a set of locations over the same material type. If it is assumed that the material properties vary randomly about a location independent mean, and that the target indications are present in only a small number of measurements, then the mean of a large number of results can be considered to be a measure of the system clutter. Subtraction of the mean waveform from each individual measurement then gives a set of waveforms in which a target reflection is more visible. Within the limitations described above it is a useful technique. What cannot be known in any practical situation is the variation of the ground properties. Some statistical estimates may be made of the properties of the ground, but the method is only applicable when the statistics of the ground are position independent.

## Time varying gain

To compare for the attenuation of the earth material, an exponential weighting may be applied to the time trace. When the trace is stored in digital form this is simple once the material attenuation is known. In real-time recording systems this can be done with a specially designed amplifier. The disadvantage of the technique, if not used intelligently, is that system noise can be exaggerated at large time values, increasing the difficulty of the interpretation of the results. A more realistic approach is to apply a gain reduction at short times so as to suppress antenna breakthrough and ground reflection signals, followed by a gain increase of up to a maximum value, after which the response is flat. This makes most effective use of dynamic range of the data presentation medium. In digital systems the breakthrough and ground surface signals can be set to zero.

## Frequency filtering

Lowpass, highpass and bandpass filters are provided and are adjusted to remove any signals not in the desired information bandwidth. Essentially the signal recovery is achieved by a filter that responds to a desired waveform in the data. Usually this is in the form of a wavelet. The filter is then designed to pick out that signal in the received waveform and to modify its shape, usually into a single peak, to increase the detection probability. The desired output shape is used as an input to the filter design process. Wiener filtering is one such method where there is available, through a calibration experiment or modelling, an estimate of the signal. An important special case of the Wiener filter is the matched filter, well known in radar detection theory. Another special case is the inverse filter, in which the spectrum of the filter is the reciprocal of the signal spectrum. In practice, there must be some band limiting applied or any noise or clutter energy will dominate the result. When noise and clutter is present the optimum filter has been defined and its frequency response H(f) is given by:

$$H(f) = \frac{s(f)}{N_0/2 + K_c|S(f)|^2}$$

Where $N_0$ is the noise power, S(f) is the signal spectrum and $K_c|S(f)|^2$ is the clutter power. In the case where clutter dominates it becomes the inverse filter and where noise dominates it becomes the matched filter. The problem with implementing such filters for detection of anomalies directly is that it cannot be assumed that the clutter spectrum is necessarily identical with that of signal received from a target, on account of the lowpass filtering effect of the ground. Thus, the antenna breakthrough signal has the widest spectrum, the ground reflection signal has some spectral reduction and backscatter from random variations in the ground and has a reducing spectral width as the scatterer lies deeper. Not only is the amplitude of the spectrum altered, but so also, in principle, is the phase response.

The above equation is optimum in the sense that it takes account of known noise and clutter properties to obtain maximum information extraction. To take account of the uncertainties in both of these quantities, it is preferable to design the Wiener filter in terms of a parameter (time resolution, for example) which can be adjusted so as to match best the characteristics of the data encountered in practice. This means that the problem of "over design" may be avoided, that is, requiring as output a pulse shape whose width and sidelobe levels are such that the filter performance becomes very sensitive to small errors in the data. Methods such as spectral estimation using Fourier techniques maximum entropy and maximum likelihood are well established and deconvolution using Wiener-Hopf or Rice filtering may also used. Velocity, polarisation and homomorphic filtering are also useful in particular situations.

As shown in Figure 3, the output of the radar system 1 is converted into an audio signal by an audio converter 3 and headphones 4. As shown in detail in Figure 4, the output is converted to a digital signal by an analogue to digital convertor 10. A digital value corresponding to the amplitude at a particular time is stored in a particular memory location 11. The memory has N locations, typically 256, and the digital value is stored in a memory location depending upon the time it was received, with the first received signals being stored in the first location, and the latest received signals in the last location. Where the radar system 1 is a ground probing radar, each of the 256 memory locations corresponds to an increment of 0.1 metre giving a total range of 25.6 metres. A plurality of audio oscillators 13,13' generates a different audio frequency, with a different frequency being generated to correspond to each of the memory locations in the memory array 11. The output of each audio oscillator is supplied to a gain control amplifier 12,12', the gain of each amplifier being dependent upon the digital value stored in the corresponding memory location. Accordingly, where no signal is reflected at a particular range, no value will be stored in the corresponding memory location or range bin, and therefore the signal generated by the corresponding audio oscillator will be multiplied by a gain of zero, namely there will be no output from the gain controlled amplifier. The output of each gain controlled amplifier 12,12' is supplied to a summing amplifier 14 which combines the audio signals, and these are amplified by an audio amplifier 15 supplied to a loud speaker or headphones 4.

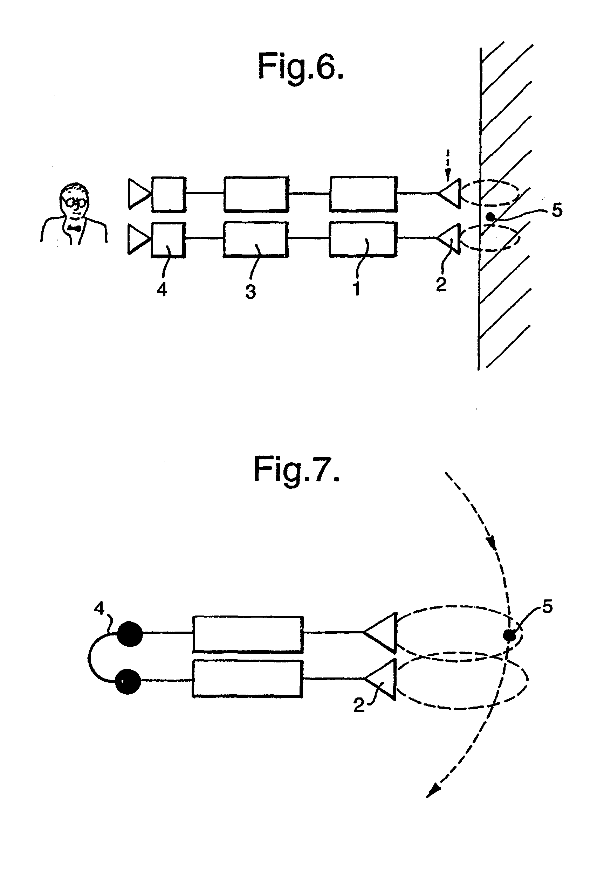

Figure 5 shows the relationship between a typical B-scan and the tone of the sound generated by the present invention. From this it can be seen that the present invention allows the operator to quickly and easily locate an object by a change in the sound.

The gain control amplifier 12,12' is further controlled to compensate for the amplitudes/frequency response of the human ear, and for path loss and other attenuation in the radar signals.

The resulting audio signal will comprise a number of individual sounds of different amplitude and frequency. By moving the radar to sweep over an area, the sounds will change, and this change is easily detectable by the human ear, and allows the easy identification of the location of objects. The same applies where the radar remains stationary and the objects move.

As shown in Figure 6, two radar systems may be provided side by side, the audio signals generated by one system forming the left channel for a stereo audio output and the audio signals from the system providing the right channel of the stereo audio output. This allows bearing information to be determined from the audio signal.

Figure 7 shows a free space radar incorporating the present invention. In this case, the radar is fixed and locates moving targets. The radar shown in Figure 7 is generally similar to that of Figure 5 in which two antennas are provided, on producing the left hand channel audio signal and the other the right hand channel audio signal. A particular application for this system may be for use in hostage situations. The radar can be directed towards the room, and will generate audio signals corresponding to persons in the room. Whenever a person moves, there will be a gradual change in the audio signal as the location from which the radar signals are reflected changes. This change in the tone or amplitude of the sound can be determined easily by the operator, and hence the movement of persons may easily be detected.

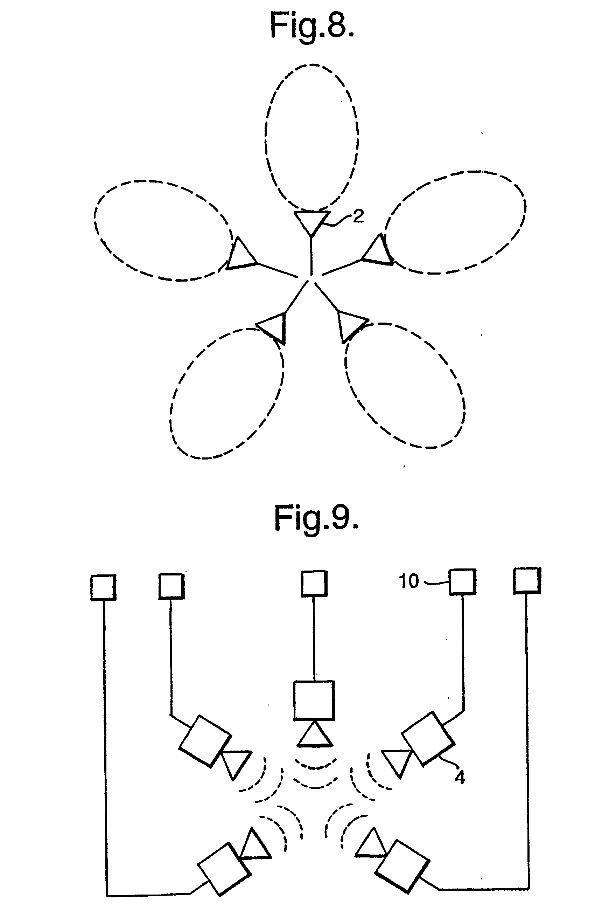

Figures 8 and 9 show the improved example of a free space radar system incorporating the present invention in which there are five antenna each of which produce separate radar signals which are detected to generate a surround sound affect with each antenna having a corresponding speaker.

## Claims

1. A radar comprises a signal source for emitting an RF signal; a detector detecting the RF signal reflected from a target and outputting a signal dependent on the range of the target and the amplitude of the reflected signal and means (3) generating an audio signal whose frequency and amplitude is dependent upon the range of the target and the amplitude of the reflected signal.

2. A radar according to claim 1, wherein the frequency of the audio signal is dependent upon the range of the target, and the amplitude is dependent upon the amplitude of the reflected signal.

3. A radar according to claims 1 or 2, wherein the maximum range of the radar is divided into a number of different equal distances, and each of these different distances is assigned an audio signal having a different frequency.

4. A radar according to any one of the preceding claims, including means to adjust the amplitude of the generated audio signals dependent upon the amplitude/frequency response of the human ear.

5. A radar according to any one of the preceding claims, including means to adjust the amplitude of the audio signal to compensate for spreading loss and path loss of the RF signal.

6. A radar according to any one of the preceding claims, including an analog to digital converter (10) to convert the amplitude of the detected signals into a digital value corresponding to the amplitude of the detected signals.

7. A radar according to claim 6, including a number of memories or range bins (11) wherein the value corresponding to the amplitude of the detected signal is stored in one of the memories or range bins (11) dependent upon the range of the target reflecting the signal.

8. A radar according to claim 7, including an audio oscillator (13) associated with each memory location (11), each of the oscillators (13) having a different audio frequency and wherein the output of each oscillator (13) is input to a gain controlled amplifier (12), the gain of each amplifier (12) being controlled by the value stored in the associated memory location (11).

9. A radar according to any one of the preceding claims, which is a ground probing radar.

10. A radar according to any one of the preceding claims, including signal processing means to improve the quality of the signals.

## Patentansprüche

1. Radar mit einer Signalquelle zum Aussenden eines Radiofrequenzsignals, einem Detektor zum Detektieren des von einem Ziel reflektierten Radiofrequenzsignals und zum Ausgeben eines Signals, das von der Entfernung des Ziels und der Amplitude des reflektierten Signals abhängt, und Mitteln (3) zum Erzeugent eines Audiosignals, dessen Frequenz und Amplitude von der Entfernung des Ziels und der Amplitude des reflektierten Signals abhängt.

2. Radar nach Anspruch 1, wobei die Frequenz des Audiosignals abhängig ist von der Entfernung des Ziels, und die Amplitude abhängig ist von der Amplitude des reflektierten Signals.

3. Radar nach Anspruch 1 oder 2, wobei die maximale Reichweite des Radar in eine Anzahl von verschiedenen gleichen Abständen unterteilt ist und jedem dieser verschiedenen Abstände ein Audiosignal mit einer anderen Frequenz zugewiesen ist.

4. Radar nach einem der vorstehenden Ansprüche mit Mitteln zum Einstellen der Amplitude der erzeugten Audiosignale in Abhängigkeit von der Amplituden/ Frequenzantwort des menschlichen Ohres.

5. Radar nach einem der vorstehenden Ansprüche mit Mitteln zum Einstellen der Amplitude des Audiosignals, um Ausbreitungsverluste und Wegverluste des Radiofrequenzsignals zu kompensieren.

6. Radar nach einem der vorstehenden Ansprüche mit einem Analog-/Digitalwandler (10) zum konvertieren der Amplitude des detektierten Signals in einen digitalen Wert entsprechend der Amplitude des detektierten Signals.

7. Radar nach Anspruch 6 mit einer Anzahl von Speichern oder Entfernungsspeicherplätzen (11), wobei der Wert entsprechend der Amplitude des detektierten Signals in einem der Speicher oder Entfernungsspeicherplätze (11) in Abhängigkeit von der Entfernung des das Signal reflektierenden Ziels gespeichert ist.

8. Radar nach Anspruch 7 mit einem Audio-Oszillator (13) verbunden mit jedem Speicherplatz (11), jeder der Oszillatoren (13) hat eine andere Audiofrequenz, wobei der Ausgang jedes Oszillators (13) ein Eingang eines verstärkungsgesteuerten Verstärkers (12) ist, die Verstärkung jedes Verstärkers (12) wird durch den in den verbundenen Speicherplatz (11) gespeicherten Wert gesteuert.

9. Radar nach einem der vorstehenden Ansprüche, das ein Bodenerkundungsradar ist.

10. Radar nach einem der vorstehenden Ansprüche, mit Signalverarbeitungsmitteln zu Verbesserung der Qualität der Signale.

**Revendications**

1. Radar comprenant une source de signal servant à émettre un signal de radiofréquence, ou signal RF ; un détecteur qui détecte le signal RF réfléchi par une cible et qui délivre un signal dépendant de la distance de la cible et de l'amplitude du signal réfléchi, et un moyen (3) qui produit un signal audio dont la fréquence et l'amplitude dépendent de la distance de la cible et de l'amplitude du signal réfléchi.

2. Radar selon la revendication 1, où la fréquence du signal audio dépend de la distance de la cible, et l'amplitude dépend de l'amplitude du signal réfléchi.

3. Radar selon la revendication 1 ou 2, où la distance maximale du radar est divisée en un certain nombre de distances égales différentes, et chacune de ces distances différentes est affectée à un signal audio ayant une fréquence différente.

4. Radar selon l'une quelconque des revendications précédentes, comportant un moyen permettant d'ajuster l'amplitude des signaux audio produits en fonction de la réponse en amplitude et en fréquence de l'oreille humaine.

5. Radar selon l'une quelconque des revendications précédentes, comportant un moyen qui sert à ajuster l'amplitude du signal audio afin de compenser les pertes d'étalement et les pertes de trajet par affaiblissement du signal RF.

6. Radar selon l'une quelconque des revendications précédentes, comportant un convertisseur analogique-numérique (10) servant à convertir l'amplitude des signaux détectés en une valeur numérique qui correspond à l'amplitude des signaux détectés.

7. Radar selon la revendication 6, comportant un certain nombre de mémoires, ou compartiments de distance, (11), où la valeur correspondant à l'amplitude du signal détecté est stockée dans l'une des mémoires, ou compartiments de distance, 11 en fonction de la distance de la cible ayant réfléchi le signal.

8. Radar selon la revendication 7, comportant un oscillateur audio (13) associé à chaque emplacement de mémorisation (11), chacun des oscillateurs (13) ayant une fréquence audio différente et où le signal de sortie de chaque oscillateur (13) est appliqué en entrée à un amplificateur (12) à commande de gain, le gain de chaque amplificateur (12) étant commandé par la valeur stockée dans l'emplacement de mémoire associé (11).

9. Radar selon l'une quelconque des revendications précédentes, qui est un radar de sondage placé au sol.

10. Radar selon l'une quelconque des revendications précédentes, comportant un moyen de traitement de signaux permettant d'améliorer la qualité des signaux.

# Fig.1.

# Fig.3.

# Fig.2.

# Fig.5.

# Fig.4.

# Fig.6.

# Fig.7.

Fig.8.

Fig.9.